# EUROPÄISCHE PATENTSCHRIFT

(11) **EP 1 417 106 B1**
(45) Veröffentlichungstag und Bekanntmachung des Hinweises auf die Patenterteilung: **02.03.2005**
(21) Anmeldenummer: 02794713.4
(22) Anmeldetag: 03.05.2002
(51) Int. Cl.: B60C 23/00, B60C 23/04

(54) **VERFAHREN UND VORRICHTUNG ZUM BETREIBEN EINER EINRICHTUNG ZUM ÜBERWACHEN UND DRAHTLOSEN SIGNALISIEREN EINER DRUCKÄNDERUNG UND ZUR AUTOMATISCHEN DRUCKREGELUNG IN LUFTREIFEN AN FAHRZEUGEN**
METHOD AND DEVICE FOR OPERATING A SYSTEM FOR MONITORING AND WIRELESSLY SIGNALLING A PRESSURE CHANGE, AND FOR AUTOMATICALLY REGULATING THE PRESSURE IN PNEUMATIC TYRES ON VEHICLES
PROCEDE ET DISPOSITIF PERMETTANT DE FAIRE FONCTIONNER UN EQUIPEMENT DE SURVEILLANCE ET DE SIGNALISATION RADIO D'UN CHANGEMENT DE PRESSION ET D'EFFECTUER UN REGLAGE AUTOMATIQUE DE LA PRESSION DES PNEUMATIQUES DE VEHICULES AUTOMOBILES

(30) Priorität: 14.08.2001 AT 127401
(43) Veröffentlichungstag der Anmeldung: 12.05.2004
(73) Patentinhaber: Steyr-Daimler-Puch Spezialfahrzeug AG & Co. KG, 1111 Wien (AT)
(72) Erfinder: SKOFF, Gerhard, A-1230 Wien (AT)
(74) Vertreter: Rippel, Andreas
(86) Internationale Anmeldenummer: PCT/AT2002/000136
(87) Internationale Veröffentlichungsnummer: WO 2003/016078

(56) Entgegenhaltungen:
- DE-A- 19 961 020
- US-A- 5 587 698

## Beschreibung

Die Erfindung bezieht sich auf ein Verfahren zum Betreiben einer Einrichtung zum Überwachen und drahtlosen Signalisieren einer Druckänderung und zur automatischen Druckregelung in Luftreifen an Fahrzeugen entsprechend dem Oberbegriff des Anspruches 1.

Der richtige Reifendruck ist eine wesentliche Voraussetzung zum Ausnützen der vollen fahrdynamischen Eigenschaften eines Reifens sowie zur Erreichung seiner konstruktiv vorgegebenen Lebensdauer und Zuverlässigkeit. Ein zu hoher oder zu geringer Reifendruck führt zu einer einseitigen raschen Abnützung des Fahrzeugreifens. Zu geringer Reifendruck und die daraus resultierende hohe Walkarbeit belastet den Reifen thermisch sehr stark und kann zu irreparablen Schäden an der Karkasse des Reifens führen. Dies ist neben mechanischen Beschädigungen die häufigste Ursache des Versagens von modernen Fahrzeugreifen.

Mittlerweile ist es, speziell in Fahrzeugen der Oberklasse, zum Stand der Technik geworden, Fahrzeuge mit einem Reifendruckkontrollsystem auszustatten. Eine typische Anwendung dazu ist aus WO 98/05519 bekannt. Dabei ist das jeweilige Rad mit einer Radelektronik ausgestattet, welche einen Drucksensor, eine Schaltung zur Verarbeitung des DruckmeBsignals, einen Sender mit Sendeantenne und eine Batterie enthält. Die Radelektroniken der einzelnen Räder senden ihre Signale in regelmäßigen Abständen an das zentrale Steuergerät. Die erforderliche Energie für das Betreiben der Sensoren und der Elektronik sowie das Senden der Signale wird aus einer Batterie bezogen, die in die Steuerelektronik integriert ist und für die eine möglichst lange Betriebszeit im Automobil, in der Regel sieben bis zehn Jahre, angestrebt wird. Da diese Radelektronik jedoch üblicherweise im Luftraum des Reifens, vorzugsweise als Fortsatz des Ventils ausgebildet, untergebracht ist, ist die gesamte Elektronikeinheit einschließlich der Batterie aus Gründen der Betriebssicherheit meist hermetisch gekapselt oder sogar mit einer Vergußmasse umhüllt. Aufgrund der Einbausituation ist die Baugröße und damit die Kapazität der Batterie sehr eingeschränkt. Um die erforderliche lange Lebensdauer nun zu erreichen ist dafür zu sorgen, dass der Stromverbrauch der gesamten Einheit so gering wie möglich ist, da ein Tausch der Batterie mit erheblichem Aufwand und erheblichen Kosten verbunden wäre.

En der DE 199 61 020 A1 wird vorgeschlagen, bei jedem Starten des Fahrzeuges den Luftdruck in den Reifen zu prüfen und gegebenenfalls zu regulieren.

Eine Analyse des Last - Reifenluftdruckkennfeldes zeigt jedoch sehr deutlich, dass bereits eine geringe Veränderung der Achslast, wie sie z.B. im Zuge einer längeren Fahrtstrecke durch den Kraftstoffverbrauch oder durch den Zu- oder Ausstieg eines Passagiers eintritt , eine Änderung des Soll-Luftdruckes bewirkt. Diese Erkenntnis soll im Rahmen der Erfindung dadurch berücksichtigt werden, dass während der Fahrt bei laufendem Motor und gleichzeitigem Stillstand der Räder für eine gewisse Zeit die Achslasten in Zeitschritten ermittelt werden, und der letzte Wert der Achslasten als aktueller Ist - Wert für die Berechnung des Reifendrucksollwertes herangezogen wird. Damit ist eine permanente Überwachung des Beladungszustandes sichergestellt.

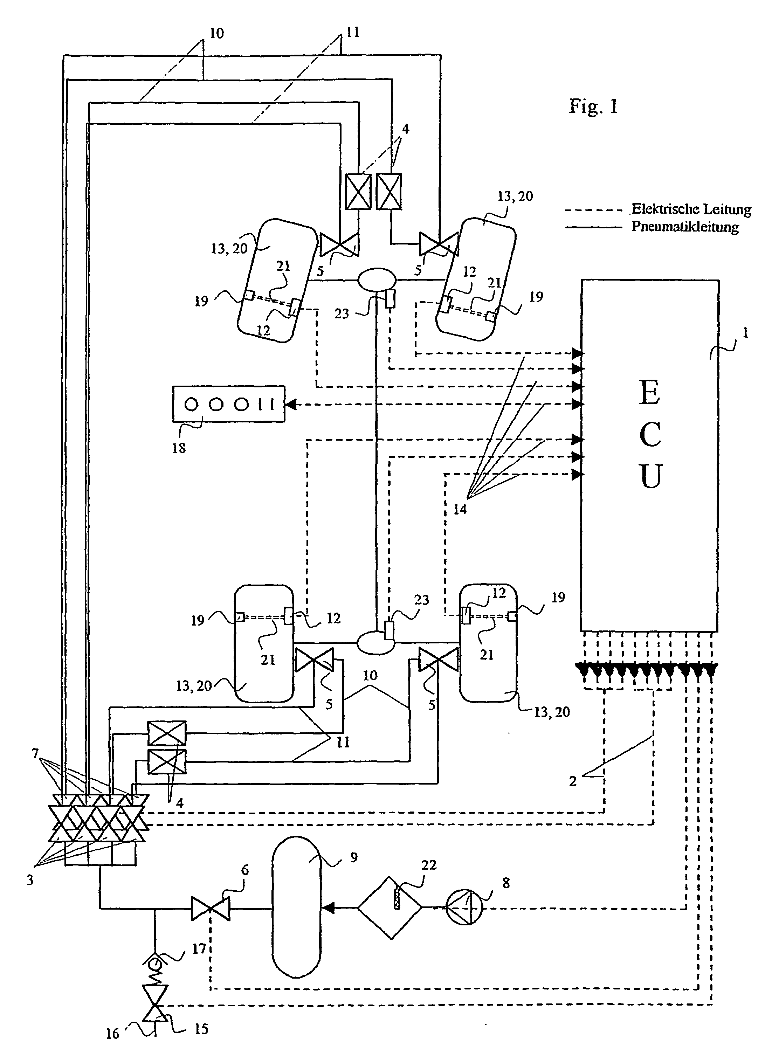

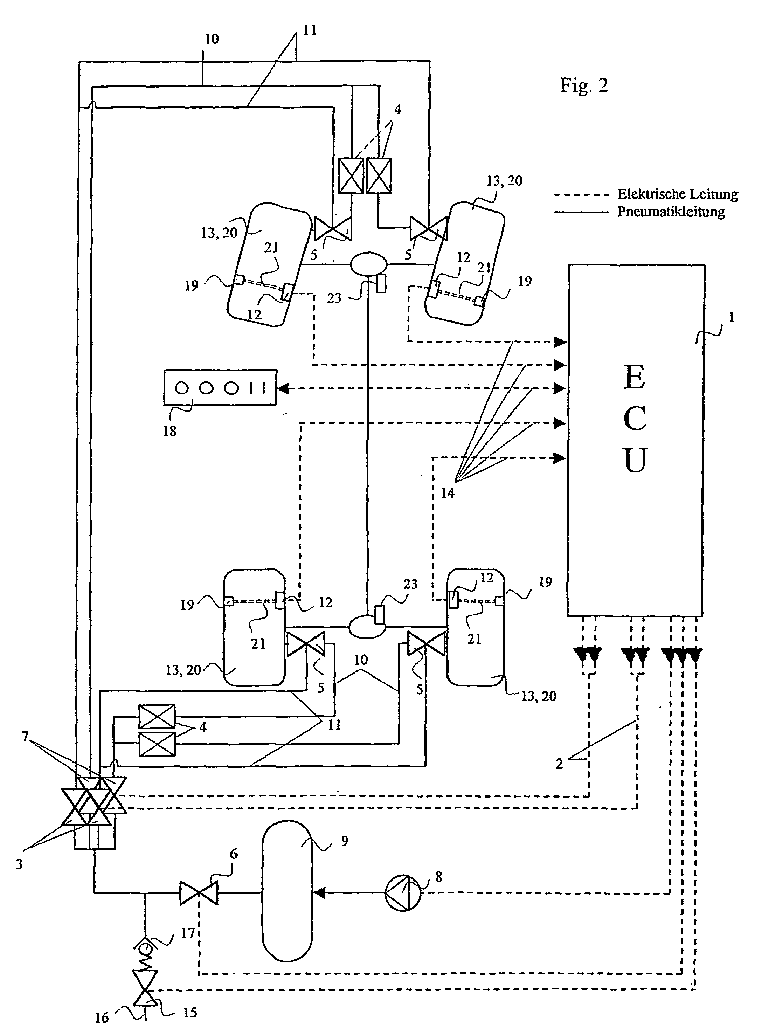

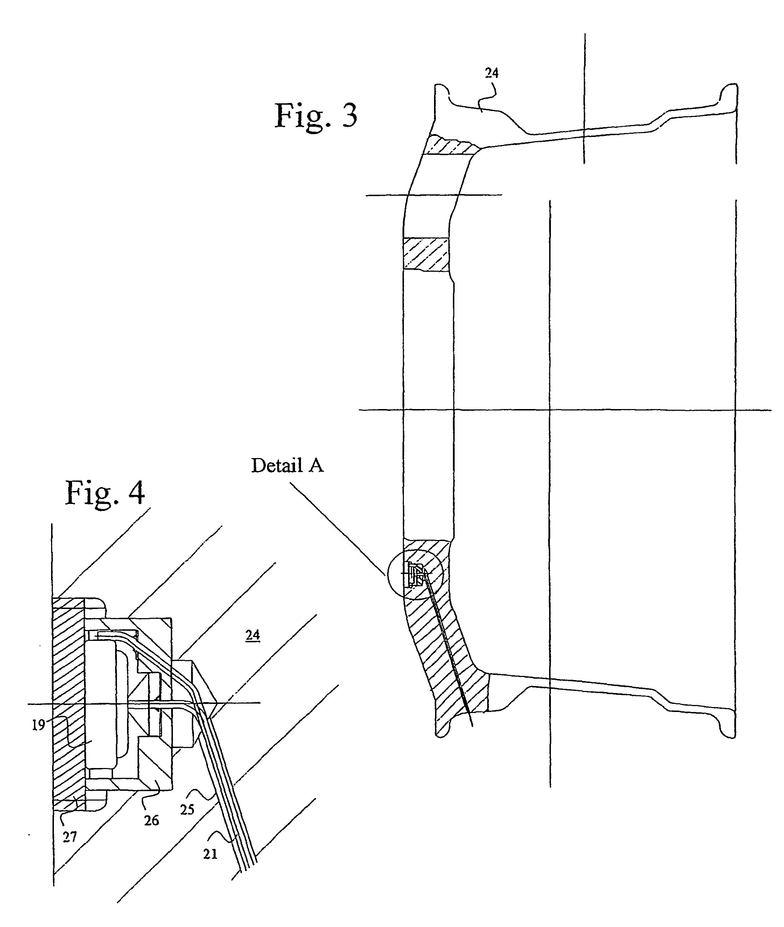

Nachstehend ist die Erfindung an Hand von in den Zeichnungen dargestellten Ausführungsbeispielen näher erläutert, ohne auf diese Beispiele beschränkt zu sein. Dabei zeigt Fig. 1 ein Schaltschema für die Ansteuerung jedes einzelnen Rades, Fig. 2 stellt eine mögliche Vereinfachung des Systems durch eine Zusammenfassung mehrerer Räder zu einem Regelkreis dar. Fig. 3 gibt einen Schnitt durch eine Felge wieder und Fig 4 zeigt in einem gegenüber der Fig. 3 vergrößertem Maßstab das Detail A mit der zweiten Batterie.

Gemäß Fig. 1 erfolgt die Steuerung durch eine zentrale Regelelektronik 1. Diese Elektronik 1 ist mit einem Sensorsystem verknüpft, das unter anderem den Beladungszustand, den Reifendruck, die Fahrgeschwindigkeit und den Fahrzustand überwacht und an die zentrale Regelelektronik kommuniziert. Eine vorzugsweise Fahrgeschwindigkeits- und Fahrzustandsüberwachung ist im Detail in WO 00/69662, auf die hier besonders Bezug genommen wird, beschrieben. Die Reifendrucküberwachung ist im Stand der Technik anhand mehrerer Beispiele dargestellt.

Durch die Verknüpfung der eingehenden Sensorsignale erkennt die Logik der Steuerung die Notwendigkeit für einen Regelvorgang. Zum Beispiel kann durch einen. Lastsensor 23 bei jedem Stillstand des Fahrzeuges nach einer kurzen Beruhigungszeit der Beladungszustand achs- oder radweise gemessen werden und der Letztwert vor der Weiterfahrt als neuer Sollwert für die Berechnung des Soll-Reifendruckes herangezogen werden. Dazu schaltet die Elektronik 1 die Pneumatikelemente wie folgt:

Erfolgt ein Schaltbefehl aufgrund einer Überschreitung der in den Regelkennfeldern jeweils vorgegebenen Schaltwerte zur Druckerhöhung in einem oder in mehreren Reifen oder Regelkreisen, werden über die elektrischen Steuerleitungen 2 die elektromagnetisch betätigten Steuerventile 3 geöffnet. Die Druckluft strömt über die Steuerluftleitungen 11 und die Steuerluftdurchführung des Dichtpaketes 4 zu den Radventilen 5 und öffnet die Ventile für die Füllung. Gleichzeitig werden das Einlaßventil 6 und die Füllventile 7 der jeweiligen Räder geöffnet, über die nun aus dem vom Kompressor 8 gespeisten Druckreservoir 9 die Druckluft zur Reifeninnendruckerhöhung durch die Fülluftleitungen 10 und die Fülluftdurchführung des Dichtpaketes 4 über das Radventil 5 in die jeweiligen Reifen 13 strömt.

Da das Volumen der Reifen 13 sehr groß ist im Vergleich zum Innenvolumen der Fülleitungen 10, und die Druckänderung im Reifen relativ langsam vor sich geht, kann der Reifeninnendruck messtechnisch als quasistatisch gesehen werden, und nur durch Messung des statischen Anteils der Luft ein hinreichend genauer Wert ermittelt werden. Die Radelektronik mit dem zugehörigen Drucksensor des Reifendruckkontrollsystems im Radinneren 12 ermittelt kontinuierlich den jeweiligen Druckwert und gibt ihn über die elektrische Steuerleitung 14 an die zentrale Steuerelektronik 1 weiter, die bei Erreichen des Sollwertes den Füllvorgang unterbricht, indem die Ansteuerung der Steuer- 3, Füll- 7 und Einlassventil 6 beendet wird. Damit schließt auch das pneumatisch betätigte Radventil 5. Anschließend werden alle pneumatischen Leitungen 10, 11 entlüftet.

Da das kontinuierliche Messen und Senden des Drucksignals über die erforderliche Lebensdauer mehr Kapazität beansprucht, als durch die radelektronikinteme Batterie bereitgestellt werden kann, wird die Radelektronik 12 durch eine zweite Batterie 19, die in der Radfelge 20 untergebracht und elektrisch mit der Radelektronik 12 über eine isolierte Leitung 21 gekoppelt ist, gepuffert.

Erfolgt ein Schaltbefehl aufgrund einer Überschreitung der in den Regelkennfeldern jeweils vorgegebenen Schaltwerte zur Druck-verminderung in einem oder in mehreren Reifen, wird der selbe Vorgang wie oben beschrieben durchgeführt, nur das Einlassventil 6 bleibt geschlossen. Anstatt dessen wird das Auslassventil 15 geöffnet, und die Luft strömt in umgekehrter Richtung vom Reifen 13 über das Radventil 5, die Fülleitungen 10, die Füllventile 7, das Auslaßventil 15 und einen Schalldämpfer 16 ins Freie. Ein Rückschlagventil 17 verhindert, dass der vorgesehene Mindestluftdruck unterschritten wird, es unterbricht den Ablaßvorgang bei Erreichen desselben. Der Abschaltbefehl wird ebenfalls durch das entsprechende Sensorsignal der Radelektronik 12 an die zentrale Steuerelektronik 1 bei Erreichen des Solldruckes gegeben.

Über eine entsprechende Anzeige 18 kann der Fahrer über den jeweiligen Zustand der Reifen informiert werden. Diese Information kann einerseits eine Defektwarnung sein, oder eine Information über die jeweilige, dem Beladungs- und Druckzustand der Reifen zugeordnete Fahrzeughöchstgeschwindigkeit.

In Fig. 1 ist auch die Erweiterung des Systems durch einen Lufttrockner 22 dargestellt, der abhängig von den klimatischen Einsatzbedingungen ein Erfordernis sein kann, aber nicht muß. Damit kann ein Einfrieren und damit ein Ausfall der Reifendruckregelanlage verhindert werden, indem die Fülluft vor Einspeisung in das System entfeuchtet wird.

Die Fig. 2 stellt eine achsweise Ansteuerung der Reifendruckregelanlage dar. Die Vereinfachung besteht darin, dass für jeden Regelkreis, in der gezeigten Darstellung für jede Achse, nur je ein Steuer- 3 und ein Füllventil 7 erforderlich ist. Weiters können die Leitungen 10, 11 zu den Rädern eines Regelkreises über längere Wege einfach geführt werden. Diese Vereinfachung gewinnt vor allem bei mehr als zweiachsigen Fahrzeugen, z.B. schweren Nutzfahrzeugen mit Anhänger an Bedeutung, da hier eine wesentliche Aufwandsreduktion durch Zusammenfassen mehrerer Räder oder Achsen erzielt werden kann.

Gemäß den Fig. 3 und 4 ist in einer Ausnehmung einer Felge 24 die zweite Batterie 19 untergebracht, die beim Ausführungsbeispiel als Knopfzelle ausgebildet ist. Die Batterie 19 wird von einem Gehäuse 26 aufgenommen, das durch einen Deckel 27 dicht verschließbar ist. In einem Hohlraum 25 der Felge 24 sind die zu den Batterie-polen rührenden Leitungen 21 isoliert untergebracht. Die anderen Enden der Leitungen 21 sind elektrisch mit der Batterie bzw. dem Akkumulator 12 der Radelektronik verbunden.

## Patentansprüche

1. Verfahren zum Betreiben einer Einrichtung zum Überwachen und drahtlosen Signalisieren einer Druckänderung und zur automatischen Druckregelung in Luftreifen an Fahrzeugen, wobei die Druckinformation für die Reifendruckregelsystemelektronik von einer Sensoreinheit im Reifeninneren bereitgestellt wird, der Beladungszustand des Fahrzeuges automatisch ermittelt und bei Abweichungen des Reifendruck-Istwertes vom Sollwert in Abhängigkeit von den Gewichtsbelastungen der Reifendruck auf den Sollwert korrigiert wird, **dadurch gekennzeichnet, dass** während der Fahrt jeweils bei laufendem Motor und gleichzeitigem Stillstand der Räder die Achslasten in Zeitschritten ermittelt werden und der letzte Wert der Achslasten als aktueller Istwert für die Berechnung des Reifendruck-Sollwertes herangezogen wird.

2. Verfahren nach Anspruch 1, **dadurch gekennzeichnet, dass** die Druckinformation permanent während des Druckregelvorganges gesendet wird.

3. Verfahren nach einem der vorstehenden Ansprüche, **dadurch gekennzeichnet, dass** die Ansteuerung der Räder wahlweise einzeln oder in Gruppen, z.B. achsweise, zusammengefasst erfolgt.

## Claims

1. A method for operating a device for monitoring and wirelessly signalling a pressure change, and for automatically regulating the pressure in pneumatic tyres on vehicles, wherein the pressure information for the electronic tyre pressure regulating system is provided by a sensor unit inside the tyre, the loading state of the vehicle is automatically determined and in the event of deviations of the actual value of the tyre pressure from the desired value depending on the weight loading, the tyre pressure is corrected to the desired value, **characterised in that** during the journey respectively with the engine running and with the wheels simultaneously at a standstill, the axle loads are determined in time steps and the last value of the axle load is used as the current actual value for calculating the desired value of the tyre pressure.

2. The method according to claim 1, **characterised in that** the pressure information is continuously transmitted during the pressure regulating process.

3. The method according to any one of the preceding claims, **characterised in that** the wheels are controlled individually or combined in groups, e.g. per axle, as desired.

## Revendications

1. Procédé pour la gestion du fonctionnement d'un dispositif pour la surveillance et la transmission sans fil d'une variation de pression et pour la régulation automatique de la pression des pneumatiques équipant des véhicules, sachant que l'information relative à la pression destinée à l'électronique du système de régulation de la pression des pneumatiques est fournie par une unité de capteur située à l'intérieur du pneu et que l'état de charge du véhicule est mesuré automatiquement et corrigé à la valeur de consigne lorsque la valeur réelle de la pression des pneumatiques diffère de la valeur de consigne, **caractérisé en ce que** les charges par essieu sont mesurées en cours de conduite, moteur tournant et roues à l'arrêt, par étapes temporelles et que la dernière valeur des charges par essieu sert de valeur réelle actuelle au calcul de la valeur de consigne de la pression des pneumatiques.

2. Procédé selon la revendication 1, **caractérisé en ce que** l'information relative à la pression est transmise constamment au cours du processus de régulation de la pression.

3. Procédé selon l'une quelconque des revendications précédentes, **caractérisé en ce que** la commande des roues s'effectue soit individuellement soit par groupes de roues, regroupées par essieu, par exemple.
